(19) Europäisches Patentamt
European Patent Office
Office européen des brevets

(11) **EP 3 160 030 A1**

(12) **EUROPEAN PATENT APPLICATION**
published in accordance with Art. 153(4) EPC

(43) Date of publication:
**26.04.2017 Bulletin 2017/17**

(21) Application number: **15809865.7**

(22) Date of filing: **26.05.2015**

(51) Int Cl.:
**H02M 7/48** (2007.01)     **H02J 3/36** (2006.01)
**H02M 7/72** (2006.01)

(86) International application number:
**PCT/JP2015/064981**

(87) International publication number:
**WO 2015/194325 (23.12.2015 Gazette 2015/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **17.06.2014 JP 2014124798**

(71) Applicant: **Kabushiki Kaisha Toshiba**
**Minato-ku**
**Tokyo 105-8001 (JP)**

(72) Inventors:
• **KINOSHITA, Yoshihito**
**Tokyo 105-8001 (JP)**
• **NORO, Yasuhiro**
**Tokyo 105-8001 (JP)**
• **NAOI, Shinya**
**Tokyo 105-8001 (JP)**
• **WANG, Mian**
**Tokyo 105-8001 (JP)**
• **TAMURA, Yuuji**
**Tokyo 105-8001 (JP)**

(74) Representative: **Hoffmann Eitle**
**Patent- und Rechtsanwälte PartmbB**
**Arabellastraße 30**
**81925 München (DE)**

(54)    **POWER CONVERTER CONTROL DEVICE**

(57)    At the time of activation and powe flow inversion of a DC power transmission system, a quick transition to the steady state is achieved. A control device includes constant voltage control circuits 11A, 11B, constant current control circuits 12A, 12B, minimum value selecting circuits 13A, 13B, a DC current setter 16, and current margin setters 15A, 15B. When a power converter 5B serves as a inverter, the DC current setter 16 increases a DC current setting value Idp, the current margin setter 15B increases a current margin $\Delta Id_2$ for the power converter 5B, and the constant current control circuits 12A, 12B output respective control angles to the power converter 5B based on the difference between the current margin $\Delta Id_2$ and the DC current setting value Idp and the input that is a DC current $Id_2$.

FIG. 1

EP 3 160 030 A1

**Description**

<u>FIELD</u>

Embodiments of the present disclosure relate to a control device for power converters which is provided in a DC power transmission system connected to an AC system, and which converts power from AC to DC or from DC to AC.

<u>BACKGROUND</u>

DC power transmission systems are applied when, for example, power is utilized between AC systems that have different commercial frequencies. A DC power transmission system includes two power converters which are connected to different AC systems, respectively, and which convert power from AC to DC or from DC to AC, and a DC line that connects the two power converters via a DC reactor.

Power converters that convert power from AC to DC are called rectifiers, while power converters that convert power from DC to AC are called inverters. When, for example, an AC system A and an AC system B that have different frequencies from each other are connected via a DC power transmission system, and the power is utilized from the AC system A to the AC system B, the power converter at the AC-system-A side serves as the rectifier, while the power converter at the AC-system-B side serves as the inverter. In this case, when the power utilization is switched from the AC system B to the AC system A, the rectifier action and the inverter action are changed over. The change in direction of the power utilization is called a power flowpower flow inversion.

The power converter is connected to a control device. The control device calculates a control angle for the power converter based on the setting value of a DC current and a DC voltage, the detected voltage and current through the DC line, thereby controlling an activation of the power converter, a power flow inversion, and an inversion prevention action, etc.

In the cases of, for example, an activation of the DC power transmission system, and a power flow inversion, the control device sets up a current margin for the power converter that will be the inverter, and then outputs the control angle, thereby controlling the power flow direction. In addition, in order to enable a quick transition to the steady state, at the time of activation or the power flow inversion, a DC current setting value is temporarily at a larger value, and the control angle is output.

<u>CITATION LIST</u>

<u>PATENT LITERATURES</u>

Patent Literature 1: JP H06-276745 A

DC power transmission systems are getting attention not only for the power utilization between AC systems but also for a long-distance and large-capacity power transmission in view of the stability and the economic aspect. This is also because of an increasing attention to renewable energy, such as wind power generation on the ocean, solar power generation at an out-country site, and geothermal power generation, in recent years. When, however, the DC line is extended to a long distance, and a static capacitance thereof increases, a necessary charging current until the DC voltage across the DC line becomes steady increases. Hence, even if the DC current setting value is increased at the time of activation or power flow inversion, a speed-up of the action until becoming the steady state is difficult.

Embodiments of the present disclosure have been made in view of the foregoing technical problems, and an objective is to provide a power converter control device which is capable of quickly transitioning to a steady state at the time of activation of a DC power transmission system or a power flow inversion.

<u>SUMMARY</u>

In order to achieve the above objective, according to an embodiment, a control device is for a power converter that converts power between two AC systems connected together via a DC line, and includes:

a constant voltage control circuit outputting a control angle to the power converter based on inputs that are a DC voltage detected value through the DC line and a DC voltage setting value;
a constant current control circuit outputting a control angle to the power converter based on inputs that are a DC current detected value through the DC line and a DC current setting value;
a minimum value selecting circuit outputting the control angle for the power converter, the control angle being a minimum value in the control angles output by the constant voltage control circuit and the constant current control circuit;

a DC current setter setting the DC current setting value; and
a current margin setter setting a current margin to be input to the power converter when the power converter serves as a inverter,
in which:

the DC current setter increases the DC current setting value when the power converter is activated;
the current margin setter increases the current margin when the power converter is activated as the inverter; and
the constant current control circuit outputs the control angle to the power converter serving as the inverter based on a difference between the current margin and the DC current setting value, and the input that is the DC current detected value.

In addition, according to another embodiment, a control device is for a power converter that converts power between two AC systems connected together via a DC line, and includes:

a constant voltage control circuit outputting a control angle to the power converter based on inputs that are a DC voltage detected value through the DC line and a DC voltage setting value;
a constant current control circuit outputting a control angle to the power converter based on an input that is a difference between a DC current detected value through the DC line and a DC current setting value;
a minimum value selecting circuit outputting the control angle for the power converter, the control angle being a minimum value in the control angles output by the constant voltage control circuit and the constant current control circuit;
a DC current setter setting the DC current setting value; and
a current margin setter setting a current margin to be input to the power converter when the power converter serves as a inverter,
in which:

the DC current setter increases the DC current setting value when the power converter is switched from a rectifier to the inverter or from the inverter to the rectifier;
the current margin setter increases the current margin when the power converter is switched from the rectifier to the inverter; and
the constant current control circuit outputs the control angle to the power converter serving as the inverter based on a difference between the current margin and the DC current setting value, and the input that is the DC current detected value.

## BRIEF DESCRIPTION OF DRAWINGS

FIG. 1 is a diagram illustrating a structure of a power converter control device according to an embodiment;
FIGs. 2A-2F are each a diagram illustrating an exemplary action of when a power converter is activated according to the embodiment;
FIGs. 3A-3F are each a diagram illustrating an action of when a power converter is activated as a comparative example;
FIGs. 4A-4F are each a diagram illustrating an exemplary action of the power converter when a power flow inversion is performed according to the embodiment; and
FIGs. 5A-5F are each a diagram illustrating an action of the power converter when a power flow inversion is performed as a comparative example.

## DETAILED DESCRIPTION

A control device for a power converter according to an embodiment will be explained below with reference to the figures.

(Structure)

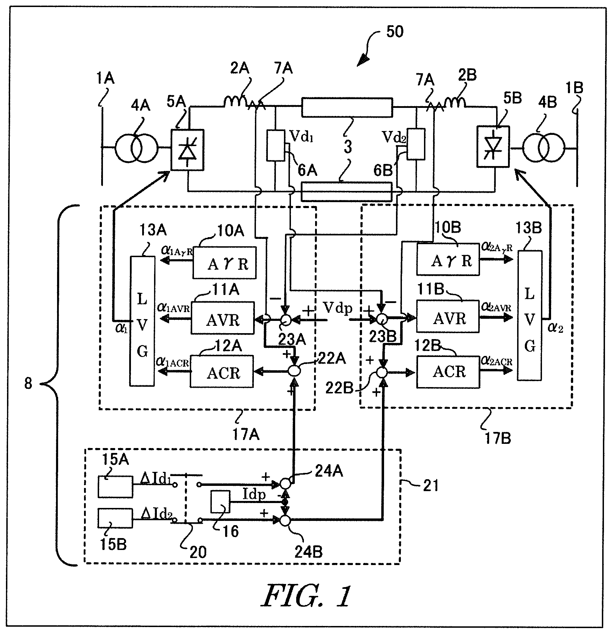

First of all, a structure of a DC power transmission system according to an embodiment, a power converter in the DC power transmission system, and a control device for the power converter will be explained. FIG. 1 illustrates a main circuit structure of a DC power transmission system 50, and a structure of a control device 8 for power converters 5A, 5B. The DC power transmission system 50 is connected to each of two AC systems 1A, 1B that have different frequencies, and includes the two power converters (hereinafter, simply referred to as "converter" in some cases) 5A, 5B that convert power from AC to DC or from DC to AC.

In the DC power transmission system 50, the converters 5A, 5B each include a six-phase or 12-phase thyristor bridge. The converter 5A and the converter 5B are connected to the AC system 1A and the AC system 1B, respectively, via respective transformers 4A, 4B. In addition, the converters 5A, 5B are connected to each other via DC reactors 2A, 2B and through a DC line 3.

In the converters 5A, 5B, one is to be operated as a rectifier that convers AC power into DC power. The other is to be operated as a inverter that converts DC power fed through the DC line 3 into AC power. Hence, power is utilized between the AC systems 1A, 1B.

The control device 8 in this embodiment controls the actions of the converters 5A, 5B. The control device 8 includes control circuits 17A, 17B which are connected to the converters 5A, 5B, respectively, and which input control angles to the respective converters 5A, 5B. The converter-5A, 5B sides of the DC line 3 are connected to DC voltage detectors 6A, 6B and DC current detectors 7A, 7B, respectively. DC voltage detected values (hereinafter, simply referred to as "DC voltage" in some cases) $Vd_1$, $Vd_2$, and DC current detected values (hereinafter, simply referred to as "DC current" in some cases) $Id_1$, $Id_2$ are input to the control circuits 17A, 17B, and are applied to control the converters 5A, 5B.

The control device 8 further includes a setting circuit 21 that inputs a current setting value Idp, and current margins $\Delta Id_1$, $\Delta Id_2$ to the respective control circuits 17A, 17B.

The control circuit 17A includes a constant margin angle control circuit 10A, a constant voltage control circuit 11A, a constant current control circuit 12A, a minimum value selecting circuit 13A, an adder 22A, and a subtractor 23A. The control circuit 17B also employs the similar structure, and thus the explanation thereof will be omitted.

The setting circuit 21 includes a DC current setter 16, a current margin setter 15A, a current margin setter 15B, a switch 20, and subtractors 24A, 24B.

The DC current setter 16 outputs the DC current setting value Idp to the subtractors 24A, 24B. The DC current setting value Idp is set to a constant value in the normal operation, but is changed to increase from the constant value at the time of activation of the converters 5A, 5B and power flow inversion. As an example, it is appropriate if the DC current setting value is increased by 110-150 % relative to the constant value.

The current margin setter 15A outputs the current margin $\Delta Id_1$ of the converter 5A to the subtractor 24A. The current margin setter 15B outputs the current margin $\Delta Id_2$ of the converter 5B to the subtractor 24B. The current margins $\Delta Id_1$, $\Delta Id_2$ are set to constant values when the converters 5A, 5B are in the normal operation, but are changed to increase from the respective constant values and to be larger than the DC current setting value Idp at the time of activation of the converters 5A, 5B and power flow inversion. That is, a change is made to satisfy $Idp < \Delta Id_1$ or $Idp < \Delta Id_2$. As an example, it is appropriate if the current margin is increased by 110-150 % relative to the DC current setting value that has been increased from the constant value.

The switch 20 is provided between the current margin setter 15A and the subtractor 24A, and between the current margin setter 15B and the subtractor 24B, and switches the configuration in a way that the current margin is input to only the converter that will be the inverter. More specifically, when the converter 5A will be the inverter, the switching is performed in a way that the current margin $\Delta Id_1$ is input to only the subtractor 24A, and when the converter 5B will be the inverter, the switching is performed in such a way that the current margin $\Delta Id_2$ is input to only the subtractor 24B.

The subtractor 24A, 24B does not input the current margin to the adder 22A, 22B of the control circuit 17A, 17B of the converter that will be the rectifier, but outputs -Idp only. A difference between the DC current setting value Idp and either the current margin $\Delta Id_1$ or $\Delta Id_2$ ($\Delta Id_1$-Idp, $\Delta Id_2$-Idp) is input to the adder 22A, 22B of the control circuit 17A, 17B of the converter that will be the inverter. That is, when the converter 5A will be the inverter, the difference ($\Delta Id_1$-Idp) between the DC current setting value Idp and the current margin $\Delta Id_1$ is input to the adder 22A of the control circuit 17. When the converter 5B will be the inverter, the difference ($\Delta Id_2$-Idp) between the DC current setting value Idp and the current margin $\Delta Id_2$ is input to the adder 22B of the control circuit 17B.

Respective detected DC currents $Id_1$, $Id_2$ detected by the DC current detectors 7A, 7B are also input to the adders 22A, 22B of the respective control circuits 17A, 17B. The adders 22A, 22B perform arithmetic processing on respective input values, and output the results to the constant current control circuits 12A, 12B, respectively.

More specifically, when the converter 5A will be the rectifier, the difference ($Id_1$-Idp) between the DC current setting value and the DC current is output, and when the converter 5A will be the inverter, ($Id_1$+$\Delta Id_1$-Idp) calculated from the DC current setting value, the current margin, and the DC current is output. Likewise, when the converter 5B will be the rectifier, the difference ($Id_2$-Idp) between the DC current setting value and the DC current is output, and when the converter 5B will be the inverter, ($Id_2$+$\Delta Id_2$-Idp) calculated from the DC current setting value, the current margin, and the DC current is output.

A predetermined DC voltage setting value Vdp and respective detected DC voltages $Vd_1$, $Vd_2$ detected by the DC voltage detectors 6A, 6B are input to the respective subtractors 23A, 23B of the control circuits 17A, 17B. The subtractors 23A, 23B output a difference (Vdp-Vd$_1$, Vdp-Vd$_2$) between the DC voltage setting value and the detected DC voltage to the respective constant voltage control circuits 11A, 11B.

The constant current control circuits 12A, 12B have respective inputs that are the output values of the adders 22A, 22B, and output control angles $\alpha_{1ACR}$, $\alpha_{2ACR}$ to perform a phase control on the converters 5A, 5B to maintain the constant DC currents Id$_1$, Id$_2$.

The constant voltage control circuits 11A, 11B have respective inputs that are the output values of the subtractors 23A, 23B, and output control angles $\alpha_{1AVR}$, $\alpha_{2AVR}$ to perform a phase control on the converters 5A, 5B to maintain the constant DC voltages Vd$_1$, Vd$_2$.

The constant margin angle control circuits 10A, 10B have respective inputs that are a predetermined margin angle, and output respective maximum control angle values $\alpha_{1A\gamma R}$, $\alpha_{2A\gamma R}$ so as not to cause the converters 5A, 5B to have a commutation error.

The minimum value selecting circuit 13A, 13B selects the minimum control angle from the output by the constant current control circuit 12A, 12B, the output by the constant voltage control circuit 11A, 11B, and the output by the constant margin angle control circuit 10A, 10B, outputs the selected angle as a control angle $\alpha_1$, $\alpha_2$ for the converter 5A, 5B, and inputs such the angle thereto.

(Action)

The action of the DC power transmission system 50 and the control device 8 for the converters 5A, 5B employing the above structure will be explained separately for a case of activation and a case of power flow inversion.

[Activation]

At the time of activation of the DC power transmission system 50, an explanation will be given of an example case in which the converter 5A is activated as the rectifier, while the converter 5B is activated as the inverter. That is, the switch 20 of the setting circuit 21 switches the configuration in a way that the current margin $\Delta Id_2$ at the converter-5B side is input to the subtractor 24B.

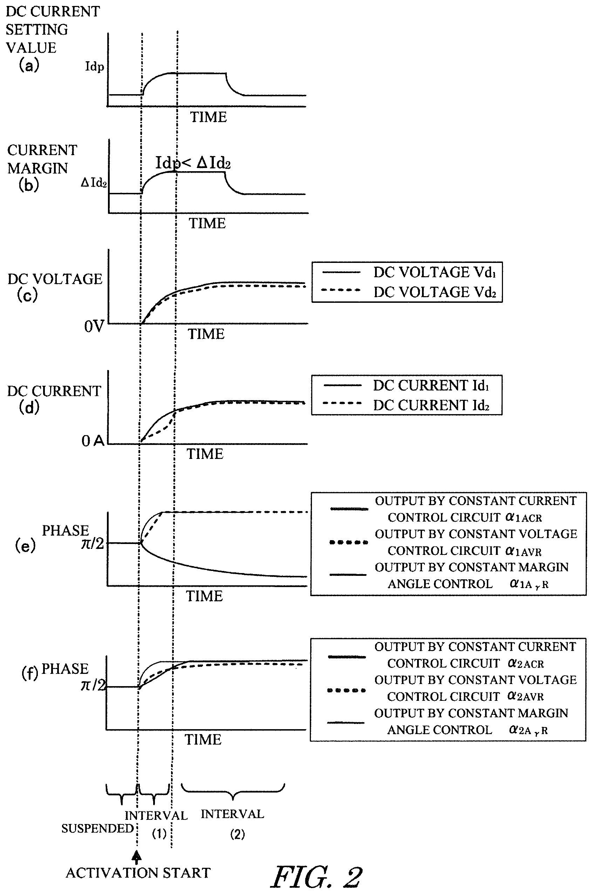

FIGs. 2A-2F each illustrate respective actions of the converters 5A, 5B, and the control device 8 from the suspension to the activation, and further to the steady state. More specifically, from top to bottom, FIGs. 2A-2F are graphs indicating a change in the DC current setting value Idp (FIG. 2A), the current margin $\Delta Id_2$ (FIG. 2B), the DC voltages Vd$_1$, Vd$_2$ (FIG. 2C), the DC currents Id$_1$, Id$_2$ (FIG. 2D), the output $\alpha_{1ACR}$ of the constant current control circuit 12A in the control circuit 17A, the output $\alpha_{1AVR}$ of the constant voltage control circuit 11A and the output $\alpha_{1A\gamma R}$ of the constant margin angle control circuit 10A (FIG. 2E), and the output $\alpha_{2ACR}$ of the constant current control circuit 12B in the control circuit 17B, the output $\alpha_{2AVR}$ of the constant voltage control circuit 11B and the output $\alpha_{2A\gamma R}$ of the constant margin angle control circuit 10B (FIG. 2F).

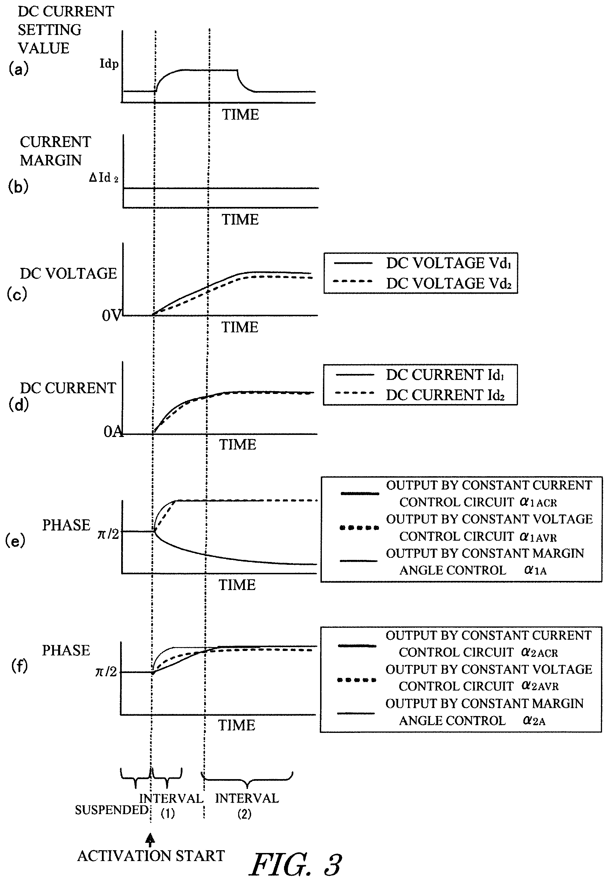

Note that FIGs. 3A-3F illustrate a comparative example. According to this embodiment, as explained above, both the current setting value Idp and the current margin $\Delta Id_2$ are increased, and a control is made so as to satisfy Idp $< \Delta Id_2$ (see FIGS. 2A and 2B) at the time of activation, but in the comparative example, only the current setting value Idp is increased, and the current margin $\Delta Id_2$ remains unchanged from the constant value (see FIGS. 3A and 3B). Also in the comparative example, the actions of the converters 5A, 5B, and the control device 8 are basically the same as those of this embodiment, and only the difference from the example of this embodiment will be explained.

In the initial stage of suspension, as illustrated in FIG. 2A, the DC voltages Vd$_1$ and Vd$_2$ are 0 V. As illustrated in FIGS. 2E and 2F, the respective outputs $\alpha_{1AVR}$, $\alpha_{2AVR}$ of the constant current control devices 11A, 11B, and the constant voltage control circuits 12A, 12B of the converters 5A, 5B are suppressed to the initial phase ($\pi/2$).

At the activation start time point indicated in the lower part of FIG. 3F, as an action of the control circuit 17A for the rectifier, input to the constant current control circuit 12A is the difference (Id$_1$-Idp) between the DC current Id$_1$ and the DC current setting value Idp. As illustrated in FIG. 2A, in the suspension, although the DC current setting value Idp is set to the constant number like the normal operation, the DC current setting value Idp is increased in an interval (1) after the start of activation.

At the activation start time point, as illustrated in FIG. 2D, the DC current Id$_1$ is substantially 0 A, and Id$_1$ < Idp is satisfied. Hence, as illustrated in FIG. 2E, the output $\alpha_{1ACR}$ of the constant current control circuit 12A decreases from the initial phase.

Input to the constant voltage control circuit 11A is the difference (Vdp-Vd$_2$) between the DC voltage Vd$_2$ and the DC voltage setting value Vdp. At the time of activation start time point, as illustrated in FIG. 2C, Vd$_2$ is extremely small, and Vdp > Vd$_2$ is satisfied. Hence, as illustrated in FIG. 2E, the output $\alpha_{1AVR}$ by the constant voltage control circuit 11A increases from the initial phase.

As explained above, the constant margin angle control circuit 10A is to suppress a commutation error of the converter 5A, and with no commutation error occurring, this constant margin angle control circuit always has a larger output than the outputs $\alpha_{1ACR}$, $\alpha_{1AVR}$ by the constant current control circuit 12A and constant voltage control circuit 11A. Hence, at the time of activation start time point, the output $\alpha_{1ACR}$ by the constant current control circuit 12A becomes the smallest value.

The minimum value selecting circuit 13A has inputs that are the respective output values of the constant current control circuit 12A, the constant voltage control circuit 11A, and the constant margin angle control circuit 10A, but the output $\alpha_{1ACR}$ by the constant current control circuit 12A that is the smallest value among those values is output to the converter 5A as a control angle $\alpha_1$.

In this case, the input to the constant current control circuit 12A is ($Id_1$-Idp), and in the initial stage of the interval (1) right after the start of activation, as illustrated in FIG. 2D, since the DC current $Id_1$ is substantially 0 A, a time until the constant current control circuit 12A reaches the steady state depends on the DC current setting value Idp. In this case, in the interval (1) after the start of activation, by increasing the DC current setting value Idp, the input to the constant current control circuit 12A is increased in the negative direction. Hence, as illustrated in FIG. 2E, the output $\alpha_{1ACR}$ by the constant current control circuit 12A is keenly decreased, and the control angle $\alpha_1$ to be output to the converter 5A is keenly decreased.

In this case, the control angle $\alpha_1$ for the converter 5A and the DC voltage $Vd_1$ have the following relationship expressed by the formula (1). Note that, in the formula (1), Vac1 is the bus line voltage of the AC system 1A, and $X_1$ is the reactance of the transformer 4A. The decreased control angle $\alpha_1$ from the initial phase causes the DC voltage $Vd_1$ to be increased based on the formula (1), and the difference between $Vd_1$ and the DC voltage across the DC line 3 increases. Hence, as illustrated in FIG. 2D, the action of further increasing the DC current $Id_1$ is achieved.

[Formula 1]

$$Vd_1 = \frac{3\sqrt{2}}{\pi} V_{ac1} \cos\alpha_1 - \frac{3}{\pi} X_1 Id_1 \qquad \cdots (1)$$

On the other hand, as an action of the control circuit 17B for the inverter, input to the constant current control circuit 12B is ($Id_2+\Delta Id_2$-Idp) calculated based on the difference between the DC current setting value Idp, and, the DC current $Id_2$ and the current margin $\Delta Id_2$ output by the current margin setter 15B via the switch 20. Since ($Id_2+\Delta Id_2$ > Idp) is satisfied, the output $\alpha_{2ACR}$ by the constant current control circuit 12B increases from the initial phase in the interval (1). In this case, as explained above, the current margin $\Delta Id_2$ is changed so as to be larger than the DC current setting value Idp in the interval (1) after the start of activation (see FIG. 2B). Hence, the output $\alpha_{2ACR}$ by the constant current control circuit 12B is keenly increased.

Input to the constant voltage control circuit 11B is the difference between the DC voltage $Vd_2$ and the DC voltage setting value Vdp, and at the time point of the start of activation, Vdp > $Vd_2$ is satisfied. Hence, as illustrated in FIG. 2F, the output $\alpha_{2AVR}$ by the constant voltage control circuit 11B increases from the initial phase. The output $\alpha_{2A\gamma R}$ by the constant margin angle control circuit 10B is larger than the respective outputs $\alpha_{2ACR}$, $\alpha_{2AVR}$ by the constant current control circuit 12B and the constant voltage control circuit 11B, like the constant margin angle control circuit 10A.

In this case, since the input ($Id_2+\Delta Id_2$-Idp) to the constant current control circuit 12B is small, the output $\alpha_{2ACR}$ by the constant current control circuit 12B is smaller than the output $\alpha_{2AVR}$ by the constant voltage control circuit 11B, and the output $\alpha_{2ACR}$ by the constant current control circuit 12B is output as a control angle $\alpha_2$ to the converter 5B from the minimum value selecting circuit 13B.

On the other hand, in the converter 5B, as ($Id_2+\Delta Id_2$-Idp) > 0 is satisfied, as illustrated in FIG. 2F, the output $\alpha_{2ACR}$ by the constant current control circuit 12B keeps increasing. Consequently, the control angle $\alpha_2$ to be output to the converter 5B also increases. In particular, according to this embodiment, not only the DC current setting value Idp but also the current margin $\Delta Id_2$ are increased, and Idp < $\Delta Id_2$ is also satisfied.

If only the DC current setting value Idp is increased, the increase rate of the output $\alpha_{2ACR}$ by the constant current control circuit 12B becomes gentle, but by increasing the current margin $\Delta Id_2$ so as to be larger than the DC current setting value Idp, the output $\alpha_{2ACR}$ by the constant current control circuit 12B keenly increases.

In this case, the control angle $\alpha_2$ for the converter 5B and the DC voltage $Vd_2$ satisfy the following relationship expressed by the formula (2). Note that, in the formula (2), Vac2 is the bus line voltage of the AC system 1B, and $X_2$ is the reactance of the transformer 4B. The increased control angle $\alpha_2$ from the initial phase also increases the DC voltage $Vd_2$ based on the formula (2).

[Formula 2]

$$Vd_2 = -(\frac{3\sqrt{2}}{\pi} V_{ac2} \cos\alpha_2 - \frac{3}{\pi} X_2 Id_2) \qquad \cdots (2)$$

The increased current margin $\Delta Id_2$ keenly increases the control angle $\alpha_2$ to be output to the converter 5B from the initial phase. The increased control angle $\alpha_2$ causes the DC voltage $Vd_2$ to be increased based on the formula (2), and decreases the difference between the DC voltage across the DC line 3 and $Vd_2$. Hence, as illustrated in FIG. 2D, an action of decreasing the DC current $Id_2$ but increasing the DC current $Id_1$ in the interval (1) is achieved. This increases the charging current through the DC line 3, and thus the DC voltages $Vd_1$, $Vd_2$ become close to the DC voltage setting value Vdp at fast speed.

As illustrated in FIG. 2C, the DC voltages $Vd_1$, $Vd_2$ become close to the DC voltage setting value Vdp in an interval (2). This decreases (Vdp-$Vd_1$) to be input to the constant voltage control circuit 11B of the control circuit 17B. Consequently, as illustrated in FIG. 2F, the output $\alpha_{2AVR}$ by the constant voltage control circuit 11B becomes smaller than the output $\alpha_{2ACR}$ by the constant current control circuit 12B.

Since $\alpha_{2AVR} < \alpha_{2ACR}$ is satisfied, the minimum value selecting circuit 13B starts outputting the output $\alpha_{2AVR}$ by the constant voltage control circuit 11B that is the control angle $\alpha_2$ instead of the output $\alpha_{2ACR}$ by the constant current control circuit 12B. This enables a constant voltage control of the converter 5B. In this embodiment, in particular, since the current margin $\Delta Id_2$ is increased, as is clear from FIG. 3F that is the comparative example, a time until $\alpha_{2AVR} < \alpha_{2ACR}$ is satisfied is reduced in comparison with a case in which only the DC current setting value Idp is increased.

Subsequently, as illustrated in FIGS. 2A and 2B, the value of the increased DC current setting value Idp is smoothly decreased to the value at the steady state after the completion of the activation so as not to give a disturbance to the power system and the DC power transmission. Hence, the activation action completes.

[Power flow Inversion]

At the time of power flow inversion in the DC power transmission system 50, as an example, an explanation will be given of a case in which, before the power flow inversion, the converter 5A serves as the inverter, while the converter 5B serves as the rectifier, and after the power flow inversion, the converter 5A serves as the rectifier, while the converter 5B serves as the inverter.

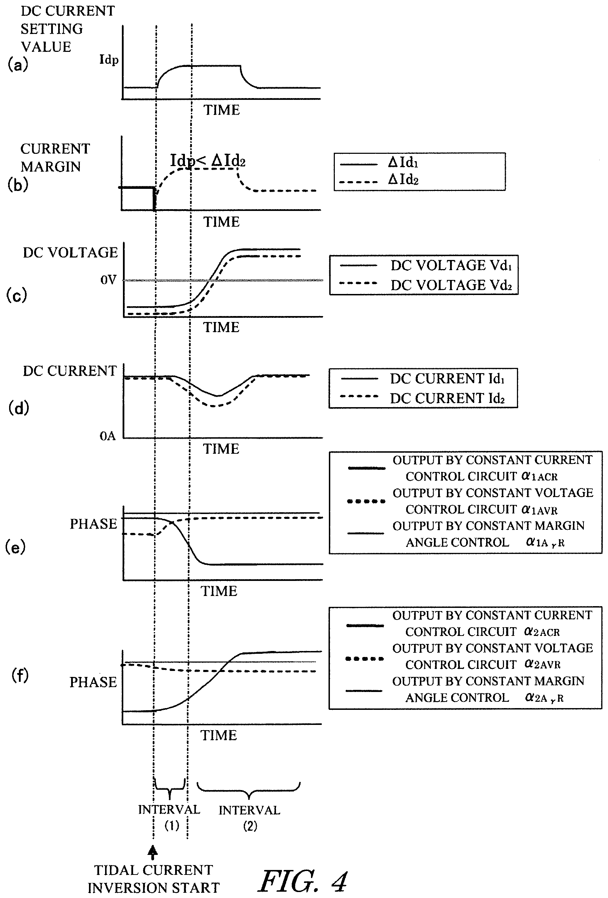

FIGs. 4A-4F each illustrate actions of the converters 5A, 5B and the control device 8 before the inversion and to the start of the inversion, and further to the steady state. More specifically, from top to bottom, FIGs. 4A-4F are graphs indicating a change in the DC current setting value Idp (FIG. 4A), the current margins $\Delta Id_1$, $\Delta Id_2$ (FIG. 4B), the DC voltages $Vd_1$, $Vd_2$ (FIG. 4C), the DC currents $Id_1$, $Id_2$ (FIG. 4D), and the output $\alpha_{1ACR}$ of the constant current control circuit 12A in the control circuit 17A, the output $\alpha_{1AVR}$ of the constant voltage control circuit 11A and the output $\alpha_{1A\gamma R}$ of the constant margin angle control circuit 10A (FIG. 4E), and the output $\alpha_{2ACR}$ of the constant current control circuit 12B in the control circuit 17B, the output $\alpha_{2AVR}$ of the constant voltage control circuit 11B and the output $\alpha_{2A\gamma R}$ of the constant margin angle control circuit 10B (FIG. 4F).

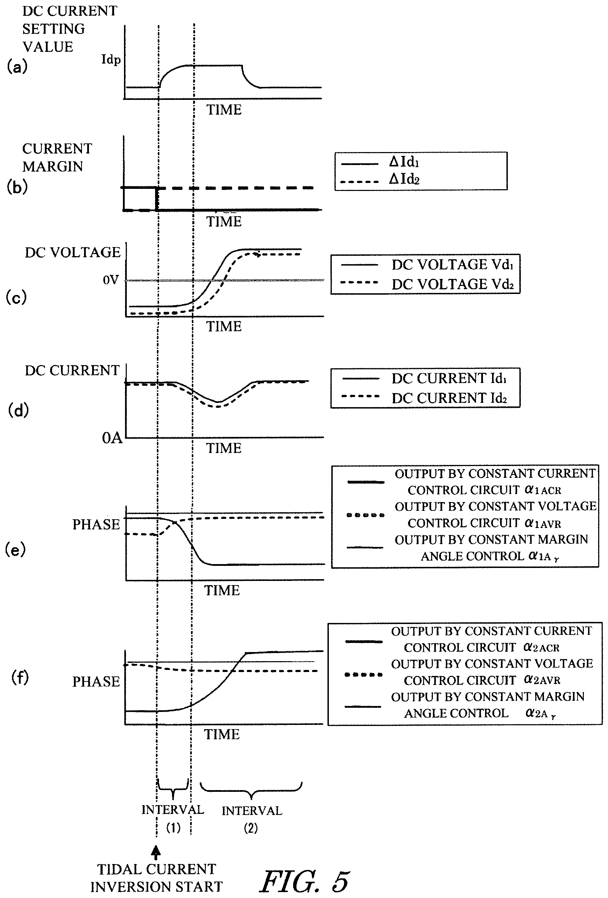

As for the power flow inversion, the comparative example is illustrated in FIGs. 5A-5F. In this embodiment, at the time of power flow inversion, a control is given in a way that the current margin is changed from $\Delta Id_1$ to $\Delta Id_2$, both the DC current setting value Idp and the current margin $\Delta Id_2$ are increased, and Idp < $\Delta Id_2$ is satisfied (see FIGS. 4A and 4B). In contrast, according to the comparative example, only the current setting value Idp is increased, and as illustrated in FIG. 5B, the current margin is changed from $\Delta Id_1$ to $\Delta Id_2$ only, and the value remains unchanged from the constant value (see FIGS. 5A and 5B). Note that in the comparative example, the actions of the converters 5A, 5B and the control device 8 are basically the same as those of the embodiment. Hence, only the difference from the embodiment will be explained.

At the time of the start of power flow inversion indicated by an arrow in the lower part of FIG. 4F, by switching a switch 20, the current margins $\Delta Id_1$, $\Delta Id_2$ input to the subtractors 24A, 24B of the setting circuit 21 are changed. As illustrated in FIG.4B, the current margin $\Delta Id_1$ that has been input to the constant current control circuit 12A of the control circuit 17A becomes zero, but the current margin $\Delta Id_2$ is now input to the constant current control circuit 12B of the control circuit 17B, and thus the power flow inversion starts. In this case, the set current margin $\Delta Id_2$ is larger than the current margin $\Delta Id_1$, and is larger than the DC current setting value Idp.

In the interval (1) after the start of the power flow inversion, as an action of the control circuit 17A for the rectifier, $\Delta Id_1$ is eliminated from the input of the constant current control circuit 12A in the control circuit, and the DC current setting value Idp increases. Hence, the input (Id$_1$-Idp) of the constant current control circuit 12A decreases, and the output $\alpha_{1ACR}$ by the constant current control circuit 12A decreases. The output $\alpha_{1ACR}$ by the constant current control circuit 12A decreases so as to be lower than the output $\alpha_{1AVR}$ by the constant voltage control circuit 11A, and becomes the minimum value among the inputs to the minimum value selecting circuit 13A. Hence, the output $\alpha_{1ACR}$ by the constant current control circuit 12A is output to the converter 5A as the control angle $\alpha_1$.

On the other hand, as an action of the control circuit 17B for a inverter, the current margin $\Delta Id_2$ is input to the constant current control circuit 12B in the control circuit, and the input of the constant current control circuit 12B becomes (Id$_2$+$\Delta Id_2$-Idp). Since Id$_2$+$\Delta Id$ > Idp is satisfied, the output $\alpha_{2ACR}$ by the constant current control circuit 12B keeps increasing.

In this case, in the initial stage of the interval (1) after the start of power flow inversion, since the difference between $Id_1$ and Idp is small, a change in output $\alpha_{2ACR}$ by the constant current control circuit 12A that has an input which is $Id_1$-Idp becomes small. Hence, as illustrated in FIG. 4A, the DC current setting value Idp is increased. Hence, as illustrated in FIG. 4E, the input of the output $\alpha_{1ACR}$ by the constant current control circuit 12A is increased in the negative direction, that is, the output $\alpha_{1ACR}$ by the constant current control circuit 12A is keenly decreased. Consequently, the control angle $\alpha_1$ to be output to the converter 5A is keenly decreased. Based on the above formula (1), since the control angle $\alpha_1$ becomes small from the value before the start of power flow inversion, the DC voltage $Vd_1$ also keenly decreases, and the voltage difference across the DC line 3 increases. Hence, an action of increasing the DC current $Id_1$ at the time of power flow inversion is achieved.

On the other hand, since $(Id_2+\Delta Id_2)$ > Idp is satisfied, $(Id_2+\Delta Id_2$-Idp) to be input to the constant current control circuit 12B also increases. Consequently, as illustrated in FIG. 4F, the output $\alpha_{2ACR}$ by the constant current control circuit 12B increases. Hence, the control angle $\alpha_2$ to be output to the converter 5B also increases from the value before the power flow inversion, and based on the above formula (2), the DC voltage $Vd_2$ is coming close to zero.

The decrease of the output $\alpha_{1ACR}$ by the constant current control circuit 12A and the increase of the output $\alpha_{2ACR}$ by the constant current control circuit 12B continue until the polarities of the DC voltages $Vd_1$ and $Vd_2$ are inverted and the values thereof become the steady value after the power flow inversion.

As illustrated in FIG. 4C, after the power flow inversion, the DC voltages $Vd_1$, $Vd_2$ become close to the DC voltage setting value Vdp in the interval (2). Accordingly, $(Vdp-Vd_1)$ to be input to the constant voltage control circuit 11B of the control circuit 17B decreases. Consequently, as illustrated in FIG. 4F, the output $\alpha_{2AVR}$ by the constant voltage control circuit 11B becomes smaller than the output $\alpha_{2ACR}$ by the constant current control circuit 12B.

Since $\alpha_{2AVR}$ < $\alpha_{2ACR}$ is satisfied, the minimum value selecting circuit 13B outputs the output $\alpha_{2AVR}$ by the constant voltage control circuit 11B that is the control angle $\alpha_2$ instead of the output $\alpha_{2ACR}$ by the constant current control circuit 12B. This enables the constant voltage control on the converter 5B. Subsequently, as illustrated in FIG. 2A, the value of increased DC current setting value Idp is smoothly decreased to the value in the steady state after the power flow inversion so as not to give a disturbance to the power system and the DC power transmission, and the power flow inversion action completes.

In this embodiment, as explained above, since the current margin $\Delta Id_2$ is increased so as to satisfy $\Delta Id_2$ > Idp, $(Id_2+\Delta Id_2$-Idp) to be input to the constant current control circuit 12B keenly increases. Consequently, as illustrated in FIG. 4F, the output $\alpha_{2ACR}$ by the constant current control circuit 12B in the control circuit 17B also keenly increases.

The increased output $\alpha_{2ACR}$ by the constant current control circuit 12B causes the control angle $\alpha_2$ to be output to the converter 5B to be keenly increased. Since the control angle is increased, based on the formula (2), the DC voltage $Vd_2$ becomes close to 0 V, and the difference relative to the DC voltage across the DC line 3 becomes small. Hence, as illustrated in FIG. 4D, an action of further decreasing the DC current $Id_2$ is achieved. The increase of the DC current $Id_1$ and the decrease of the DC current $Id_2$ increase the charging-discharging current through the DC line 3, and reduce a time until the polarities of the DC voltages $Vd_1$, $Vd_2$ are inverted and the DC power transmission system reaches the steady state after the power flow inversion. This is apparent when FIG. 4C is compared with the comparative example that is FIG. 5C.

(Effect)

(1) As explained above, the control device 8 for the power converters 5A, 5B of this embodiment converts power between the two AC systems connected together via the DC line 3, and includes the constant voltage control circuits 11A, 11B that output the respective control angles $\alpha_{1AVR}$, $\alpha_{2AVR}$ based on the inputs which are the DC voltage detected values $Vd_1$, $Vd_2$ through the DC line 3, and the DC voltage setting value Vdp, the constant current control circuits 12A, 12B that output the respective control angles $\alpha_{1ACR}$, $\alpha_{2ACR}$ based on the inputs that are the DC current detected values $Id_1$, $Id_2$ through the DC line 3 , and the DC current setting value Idp, the minimum value selecting circuits 13A, 13B that output the respective control angles $\alpha_1$, $\alpha_2$ for the power converters 5A, 5B which are the respective minimum values among the control angles output by the constant voltage control circuits 11A, 11B and the constant current control circuits 12A, 12B, the DC current setter 16 that sets up the DC current setting value Idp, and the current margin setters 15A, 15B that set the respective current margins $\Delta Id_1$, $\Delta Id_2$ to be input when the power converters 5A, 5B respectively action as the inverter. When the power converter 5B is activated as the inverter, the DC current setter 16 increases the DC current setting value Idp, and when the power converter 5B is activated as the inverter, the current margin setter 15B increases the current margin $\Delta Id_2$. In addition, the constant current control circuits 12A, 12B output the control angle $\alpha_{2ACR}$ based on inputs that are the difference between the current margin $\Delta Id_2$ and the DC current setting value Idp, and the DC current detected value $Id_2$.

By increasing the current margin $\Delta Id_2$ in addition to the DC current setting value Idp, the output $\alpha_{2ACR}$ by the constant current control circuit 12B at the inverter side is keenly increased, and the DC current $Id_2$ is decreased. On the other hand, the DC current $Id_1$ at the rectifier side is keenly increased in accordance with the increase in DC current setting value Idp. By this, the charging current through the DC line 3 keenly increases, causing the DC voltages $Vd_1$, $Vd_2$ to become close to the DC voltage setting value Vdp at fast speed, resulting in a reduction of a time until the DC power transmission system 50 reaches the steady state.

Note that when the power converter 5A is activated as the inverter, by increasing the current margin $\Delta Id_1$, the same effects can be achieved.

(2) In the control device 8 according to this embodiment, in addition, the DC current setter 16 increases the DC current set value Idp when the power converter 5B is switched from the rectifier to the inverter. Still further, the current margin setter 15B increases the current margin $\Delta Id_2$ when the power converter 5B is switched from the rectifier to the inverter, and the constant current control circuit 12B outputs the control angle $\alpha_{2ACR}$ based on the inputs that are the difference between the current margin $\Delta Id_2$ and the DC current set value Idp, and the DC current detected value $Id_2$.

At the time of power flow inversion, by increasing the current margin $\Delta Id_2$ in addition to the DC current setting value Idp, the output $\alpha_{2ACR}$ by the constant current control circuit 12B at the inverter side is keenly increased, and the DC current $Id_2$ is decreased. On the other hand, the DC current $Id_1$ at the rectifier side is keenly increased by the increased DC current setting value Idp. This increases the charging-discharging current through the DC line 3, and reduces the time until the polarities of the DC voltages $Vd_1$, $Vd_2$ are inverted and reaching the steady state after the power flow inversion.

Note that when the power converter 5A is switched from the rectifier to the inverter, by increasing the current margin $\Delta Id_2$, the same effects can be achieved.

(3) Still further, according to this embodiment, at the time of activation and power flow inversion, the current margin setter 15B sets the current margin to be larger than the increased DC current setting value Idp by the DC current setter 16. This further keenly increases the output $\alpha_{2ACR}$ by the constant current control circuit 12B at the inverter side based on the input that is ($Id_2+\Delta Id_2$-Idp), enabling an achievement of a further quick transition of the DC power transmission system 50 to the steady state.

[Other Embodiments]

(1) In the above embodiment, the explanation has been given of the example DC power transmission system 50 that connects the two different AC systems 1A, 1B, but the present disclosure is also applicable to DC power transmission systems that connect an AC system, and a power generation plant which utilizes renewable energies, such as solar light power generation, wind power generation, geothermal power generation, and water power generation.

(2) The present disclosure is not directly limited to the foregoing embodiment, and can be embodied with a modification to the structural component that does not depart from the scope of the present disclosure when carried out. In addition, appropriate combinations of the multiple structural components disclosed in the foregoing embodiment can form various kinds of invention. For example, some structural components may be omitted from the entire structural components disclosed in the foregoing embodiment. In addition, structural components across different embodiments may be combined as appropriate.

REFERENCE SIGNS LIST

| | |
|---|---|
| 1A, 1B | AC system |
| 2A, 2B | DC reactor |
| 3 | DC line |
| 4A, 4B | Transformer |
| 5A, 5B | Power converter |
| 6A, 6B | DC voltage detector |
| 7A, 7B | DC current detector |
| 8 | Control device |
| 10A, 10B | Constant margin angle control circuit |
| 11A, 11B | Constant voltage control circuit |
| 12A, 12B | Constant current control circuit |

13A, 13B     Minimum value selecting circuit
15A, 15B     Current margin setter
16     DC current setter
17A, 17B     Control circuit
20     Switch
21     Setting circuit
22A, 22B     Adder
23A, 23B     Subtractor
24A, 24B     Subtractor
50     DC power transmission system

**Claims**

1. A control device for a power converter that converts power between two AC systems connected together via a DC line, the control device comprising:

> a constant voltage control circuit outputting a control angle to the power converter based on inputs that are a DC voltage detected value through the DC line and a DC voltage setting value;
> a constant current control circuit outputting a control angle to the power converter based on inputs that are a DC current detected value through the DC line and a DC current setting value;
> a minimum value selecting circuit outputting the control angle for the power converter, the control angle being a minimum value in the control angles output by the constant voltage control circuit and the constant current control circuit;
> a DC current setter setting up the DC current setting value; and
> a current margin setter setting up a current margin to be input to the power converter when the power converter serves as a inverter,
> wherein:

>> the DC current setter increases the DC current setting value when the power converter is activated;
>> the current margin setter increases the current margin when the power converter is activated as the inverter; and
>> the constant current control circuit outputs the control angle to the power converter serving as the inverter based on a difference between the current margin and the DC current setting value, and the input that is the DC current detected value.

2. The power converter control device according to claim 1, wherein the current margin setter increases the current margin to be larger than the increased DC current setting value by the DC current setter when the power converter is activated as the inverter.

3. A control device for a power converter that converts power between two AC systems connected together via a DC line, the control device comprising:

> a constant voltage control circuit outputting a control angle to the power converter based on inputs that are a DC voltage detected value through the DC line and a DC voltage setting value;
> a constant current control circuit outputting a control angle to the power converter based on an input that is a difference between a DC current detected value through the DC line and a DC current setting value;
> a minimum value selecting circuit outputting the control angle for the power converter, the control angle being a minimum value in the control angles output by the constant voltage control circuit and the constant current control circuit;
> a DC current setter setting up the DC current setting value; and
> a current margin setter setting up a current margin to be input to the power converter when the power converter serves as a inverter,
> wherein:

>> the DC current setter increases the DC current setting value when the power converter is switched from a rectifier to the inverter or from the inverter to the rectifier;
>> the current margin setter increases the current margin when the power converter is switched from the rectifier to the inverter; and

the constant current control circuit outputs the control angle to the power converter serving as the inverter based on a difference between the current margin and the DC current setting value, and the input that is the DC current detected value.

4. The power converter control device according to claim 3, wherein the current margin setter increases the current margin to be larger than the increased DC current setting value by the DC current setter when the power converter is switched from the rectifier to the inverter.

*FIG. 1*

DC CURRENT
SETTING
VALUE
(a)

$I_{dp}$

TIME

CURRENT
MARGIN
(b)

$\Delta I_{d2}$

$I_{dp} < \Delta I_{d2}$

TIME

DC VOLTAGE
(c)

0V

TIME

——— DC VOLTAGE $V_{d1}$
----- DC VOLTAGE $V_{d2}$

DC CURRENT
(d)

0 A

TIME

——— DC CURRENT $I_{d1}$
----- DC CURRENT $I_{d2}$

(e) PHASE
$\pi/2$

TIME

——— OUTPUT BY CONSTANT CURRENT
CONTROL CIRCUIT $\alpha_{1ACR}$
••••• OUTPUT BY CONSTANT VOLTAGE
CONTROL CIRCUIT $\alpha_{1AVR}$
——— OUTPUT BY CONSTANT MARGIN
ANGLE CONTROL $\alpha_{1A\gamma R}$

(f) PHASE
$\pi/2$

TIME

——— OUTPUT BY CONSTANT CURRENT
CONTROL CIRCUIT $\alpha_{2ACR}$
••••• OUTPUT BY CONSTANT VOLTAGE
CONTROL CIRCUIT $\alpha_{2AVR}$
——— OUTPUT BY CONSTANT MARGIN
ANGLE CONTROL $\alpha_{2A\gamma R}$

SUSPENDED

INTERVAL
(1)

INTERVAL
(2)

ACTIVATION START

*FIG. 2*

13

DC CURRENT
SETTING
VALUE
(a)

Idp

TIME

CURRENT
MARGIN
(b)

$\Delta Id_2$

TIME

DC VOLTAGE
(c)

0V

TIME

——— DC VOLTAGE $Vd_1$
- - - - DC VOLTAGE $Vd_2$

DC CURRENT
(d)

0A

TIME

——— DC CURRENT $Id_1$
- - - - DC CURRENT $Id_2$

PHASE
(e)

$\pi/2$

TIME

—— OUTPUT BY CONSTANT CURRENT
     CONTROL CIRCUIT $\alpha_{1ACR}$
····· OUTPUT BY CONSTANT VOLTAGE
     CONTROL CIRCUIT $\alpha_{1AVR}$
— OUTPUT BY CONSTANT MARGIN
     ANGLE CONTROL $\alpha_{1A}$

PHASE
(f)

$\pi/2$

TIME

—— OUTPUT BY CONSTANT CURRENT
     CONTROL CIRCUIT $\alpha_{2ACR}$
     OUTPUT BY CONSTANT VOLTAGE
····· CONTROL CIRCUIT $\alpha_{2AVR}$
— OUTPUT BY CONSTANT MARGIN
     ANGLE CONTROL $\alpha_{2A}$

SUSPENDED INTERVAL INTERVAL
              (1)       (2)

ACTIVATION START

*FIG. 3*

DC CURRENT
SETTING
VALUE
(a)

Idp

TIME

CURRENT
MARGIN
(b)

Idp< ΔId₂

—— ΔId₁
---- ΔId₂

TIME

DC VOLTAGE

0V

(c)

—— DC VOLTAGE Vd₁
---- DC VOLTAGE Vd₂

TIME

DC CURRENT

(d)

0A

—— DC CURRENT Id₁
---- DC CURRENT Id₂

TIME

PHASE

(e)

—— OUTPUT BY CONSTANT CURRENT
    CONTROL CIRCUIT $\alpha_{1ACR}$
••••• OUTPUT BY CONSTANT VOLTAGE
    CONTROL CIRCUIT $\alpha_{1AVR}$
—— OUTPUT BY CONSTANT MARGIN
    ANGLE CONTROL    $\alpha_{1A\gamma R}$

TIME

(f)  PHASE

—— OUTPUT BY CONSTANT CURRENT
    CONTROL CIRCUIT $\alpha_{2ACR}$
••••• OUTPUT BY CONSTANT VOLTAGE
    CONTROL CIRCUIT $\alpha_{2AVR}$
—— OUTPUT BY CONSTANT MARGIN
    ANGLE CONTROL    $\alpha_{2A\gamma R}$

TIME

INTERVAL
(1)

INTERVAL
(2)

TIDAL CURRENT
INVERSION START

*FIG. 4*

DC CURRENT
SETTING
VALUE
(a)

Idp

TIME

CURRENT
MARGIN
(b)

——— ΔId₁
- - - - ΔId₂

TIME

DC VOLTAGE
0V
(c)

——— DC VOLTAGE Vd₁
- - - - DC VOLTAGE Vd₂

TIME

DC CURRENT
(d)
0A

——— DC CURRENT Id₁
- - - - DC CURRENT Id₂

TIME

PHASE
(e)

OUTPUT BY CONSTANT CURRENT
CONTROL CIRCUIT $\alpha_{1ACR}$
OUTPUT BY CONSTANT VOLTAGE
CONTROL CIRCUIT $\alpha_{1AVR}$
OUTPUT BY CONSTANT MARGIN
ANGLE CONTROL $\alpha_{1A\gamma}$

TIME

(f)    PHASE

OUTPUT BY CONSTANT CURRENT
CONTROL CIRCUIT $\alpha_{2ACR}$
OUTPUT BY CONSTANT VOLTAGE
CONTROL CIRCUIT $\alpha_{2AVR}$
OUTPUT BY CONSTANT MARGIN
ANGLE CONTROL    $\alpha_{2A\gamma}$

TIME

INTERVAL      INTERVAL
(1)              (2)

TIDAL CURRENT
INVERSION START     *FIG. 5*

## INTERNATIONAL SEARCH REPORT

International application No.

PCT/JP2015/064981

A.  CLASSIFICATION OF SUBJECT MATTER

*H02M7/48*(2007.01)i, *H02J3/36*(2006.01)i, *H02M7/72*(2006.01)i

According to International Patent Classification (IPC) or to both national classification and IPC

B.  FIELDS SEARCHED

Minimum documentation searched (classification system followed by classification symbols)
H02M7/48, H02J3/36, H02M7/72

Documentation searched other than minimum documentation to the extent that such documents are included in the fields searched
Jitsuyo Shinan Koho         1922–1996   Jitsuyo Shinan Toroku Koho   1996–2015
Kokai Jitsuyo Shinan Koho   1971–2015   Toroku Jitsuyo Shinan Koho   1994–2015

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 06-276745 A  (Toshiba Corp.), 30 September 1994 (30.09.1994), paragraphs [0019] to [0030]; fig. 1 to 5 (Family: none) | 1-4 |
| A | JP 08-205409 A  (Asea Brown Boveri AB.), 09 August 1996 (09.08.1996), paragraphs [0027], [0031] to [0035]; fig. 1, 3, 6 to 7 & US 5621626 A          & EP 0707370 A2 & CN 1128431 A | 1-4 |
| A | JP 54-067646 A  (Hitachi, Ltd.), 31 May 1979 (31.05.1979), page 2, lower left column, line 5 to lower right column, line 17; fig. 5 to 6 (Family: none) | 1-4 |

☒  Further documents are listed in the continuation of Box C.          ☐  See patent family annex.

| | |
|---|---|
| * Special categories of cited documents:<br>"A" document defining the general state of the art which is not considered    to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 10 August 2015 (10.08.15) | 18 August 2015 (18.08.15) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

**INTERNATIONAL SEARCH REPORT**

International application No.

PCT/JP2015/064981

C (Continuation).    DOCUMENTS CONSIDERED TO BE RELEVANT

| Category* | Citation of document, with indication, where appropriate, of the relevant passages | Relevant to claim No. |
|---|---|---|
| A | JP 60-241715 A  (The Tokyo Electric Power Co., Inc., Hitachi, Ltd.), 30 November 1985 (30.11.1985), page 3, lower left column, lines 12 to 16; fig. 1 to 5 (Family: none) | 1-4 |

Form PCT/ISA/210 (continuation of second sheet) (July 2009)

**EP 3 160 030 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06276745 A